# EUROPEAN PATENT SPECIFICATION

(11) **EP 4 554 192 B1**
(45) Date of publication and mention of the grant of the patent: **29.04.2026**
(21) Application number: 24211954.3
(22) Date of filing: 11.11.2024
(51) Int. Cl.: H04L 69/14

(54) **COMMUNICATION MANAGEMENT**
KOMMUNIKATIONSVERWALTUNG
GESTION DE COMMUNICATION

(30) Priority: 13.11.2023 FI 20236256
(43) Date of publication of application: 14.05.2025
(73) Proprietor: Telia Company AB, 169 94 Solna (SE)
(72) Inventor: SILLÉN, Torbjörn, 129 39 HÄGERSTEN (SE)
(74) Representative: Berggren Oy

(56) References cited:
- EP-A1- 3 769 559

## Description

### TECHNICAL FIELD

The invention concerns in general the technical field of telecommunications. More particularly, the invention concerns a management of latency issues in a communication system.

### BACKGROUND

Various applications in a field of telecommunication have high quality requirements. For example, industrial applications e.g. in a medical field or in a safety solutions require a fast response and, therefore, a latency in the communication shall be minimized. The latency becomes an issue especially in applications wherein at least part of the communication is implemented wirelessly with radio signals.

In accordance with some prior art solutions the latency issue is addressed by prioritizing different communication channels in the communication network so that the most critical applications are provided with higher priority than some others. The problem with the prioritizing is that the changing radio environment still causes latency spikes even if some communication channels are prioritized. Another approach is that a plurality of parallel communication channels are arranged between the communicating entities, but this is a costly approach and reserves network resources in terms of maintaining the plurality of communication channels from one end to the other end.

In a document EP 3769559 A4 a data packet duplication transmission mechanism is disclosed.

Therefore, there is room for introducing novel approaches in order to mitigate at least in part the drawbacks of the existing solutions.

### SUMMARY

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

An object of the invention is to present an apparatus, a method and a computer program for managing a transmit of data. Another object of the invention is to present an apparatus, a method and a computer program for managing a receipt of data.

The objects of the invention are reached by methods, apparatuses and computer programs as defined by the respective independent claims.

According to a first aspect, an apparatus is provided, the apparatus residing at a transmitting end in a communication system wherein communication between the transmitting end and a receiving end is at least in part performed wirelessly, the apparatus is configured to:
receive a data packet from a router device,
generate a first transmittable data packet at least by:
   inserting a payload of the received data packet to the first transmittable data packet,
   defining a destination address of the first transmittable data packet to cause a delivery of the first transmittable data packet over a first communication channel, and
   defining an index to the first transmittable data packet for identifying the first transmittable data packet,
generate a second transmittable data packet at least by:
   inserting a payload of the received data packet to the second transmittable data packet,
   defining a destination address of the second transmittable data packet to cause a delivery of the second transmittable data packet over a second communication channel, and
   defining an index to the second transmittable data packet for identifying the second transmittable data packet,
transmit the first transmittable data packet and the second transmittable data packet to the router device,
wherein the apparatus is configured to generate the first index introduced to the first transmittable data packet and the second index introduced to the second transmittable data packet so that they are related to each other wherein the apparatus is configured to set a relation between the first index to the second index by at least one of: a value of the first index and a value of the second index are provided with a common portion; the value of the first index and the value of the second index comply a predefined numerical scheme, and
wherein the apparatus is configured to define the destination address of the first transmittable data packet and the destination address of the second transmittable data packet so that the first transmittable data packet is transmitted over a first radio interface and the second transmittable data packet is transmitted over a second radio interface of the communication system, the first radio interface and the second radio interface implement communication at different frequency bands.

According to a second aspect, a method is provided, the method is for managing a transmit of data by an apparatus residing at a transmitting end in a communication system wherein communication between the transmitting end and a receiving end is at least in part performed wirelessly, the method, performed by an apparatus, comprises:
receiving a data packet from a router device,
generating a first transmittable data packet at least by:
   inserting a payload of the received data packet to the first transmittable data packet,
   defining a destination address of the first transmittable data packet to cause a delivery of the first transmittable data packet over a first communication channel, and
   defining an index to the first transmittable data packet for identifying the first transmittable data packet,
generating a second transmittable data packet at least by:
   inserting a payload of the received data packet to the second transmittable data packet,
   defining a destination address of the second transmittable data packet to cause a delivery of the second transmittable data packet over a second communication channel, and
   defining an index to the second transmittable data packet for identifying the second transmittable data packet,
transmitting the first transmittable data packet and the second transmittable data packet to the router device,
wherein the first index introduced to the first transmittable data packet and the second index introduced to the second transmittable data packet are generated so that they are related to each other, wherein a relation between the first index to the second index is set by at least one of: a value of the first index and a value of the second index are provided with a common portion; the value of the first index and the value of the second index comply a predefined numerical scheme, and
wherein the destination address of the first transmittable data packet and the destination address of the second transmittable data packet are defined so that the first transmittable data packet is transmitted over a first radio interface and the second transmittable data packet is trans-mitted over a second radio interface of the communication system, the first radio interface and the second radio interface implement communication at different frequency bands.

According to a third aspect, a computer program is provided, the computer program comprising instructions to cause the apparatus according to the first aspect as defined above to execute the steps of the method according to the second aspect as defined above.

According to a fourth aspect, an apparatus is provided, the apparatus residing at a receiving end in a communication system wherein communication between a transmitting end and the receiving end is at least in part performed wirelessly, the apparatus is configured to:
receive a data packet over a communication channel, the data packet carrying an index identifying the data packet,
detect, based on data carried in the index of the received data packet, if the index received in the data packet is related to an index in a prior data packet received by the apparatus,
perform one of the following:
   generate a data packet for forwarding by removing the index from the data packet received in response to a detection that the index received in the data packet is not related to an index in a prior data packet received by the apparatus,
   ignore the data packet received in response to a detection that the index received in the data packet is related to an index in a prior data packet received by the apparatus,
wherein the apparatus is configured to perform a detection if the index received in the data packet is related to an index in a prior data packet received by the apparatus at least by one of: determining if a value of the index received in the data packet and a value of the index in a prior data packet are provided with a predefined common portion; determining if the value of the index received in the data packet and the value of the index in a prior data packet comply a predefined numerical scheme.

According to a fifth aspect, a method is provided, the method is for managing a receipt of data by an apparatus residing at a receiving end in a communication system wherein communication between a transmitting end and the receiving end is at least in part performed wirelessly, the method, performed by an apparatus, comprises:
receiving a data packet over a communication channel, the data packet carrying an index identifying the data packet,
detecting, based on data carried in the index of the received data packet, if the index received in the data packet is related to an index in a prior data packet received by the apparatus,
performing one of the following:
   generating a data packet for forwarding by removing the index from the data packet received in response to a detection that the index received in the data packet is not related to an index in a prior data packet received by the apparatus,
   ignoring the data packet received in response to a detection that the index received in the data packet is related to an index in a prior data packet received by the apparatus,
wherein a detection if the index received in the data packet is related to an index in a prior data packet received by the apparatus is performed at least by one of: determining if a value of the index received in the data packet and a value of the index in a prior data packet are provided with a predefined common portion; determining if the value of the index received in the data packet and the value of the index in a prior data packet comply a predefined numerical scheme.

According to a sixth aspect, a computer program comprising instructions to cause the apparatus according to the fourth aspect as defined above to execute the steps of the method according to the fifth aspect above.

The expression "a number of" refers herein to any positive integer starting from one, e.g. to one, two, or three.

The expression "a plurality of" refers herein to any positive integer starting from two, e.g. to two, three, or four.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### BRIEF DESCRIPTION OF FIGURES

The embodiments of the invention are illustrated by way of example, and not by way of limitation, in the figures of the accompanying drawings.
Figure 1 illustrates schematically a communication system according to an example.
Figures 2A and 2B illustrate schematically methods according to examples.
Figure 3 illustrates schematically an apparatus suitable for implementing methods according to an example.

### DESCRIPTION OF THE EXEMPLIFYING EMBODIMENTS

The specific examples provided in the description given below should not be construed as limiting the scope and/or the applicability of the appended claims. Lists and groups of examples provided in the description given below are not exhaustive unless otherwise explicitly stated.

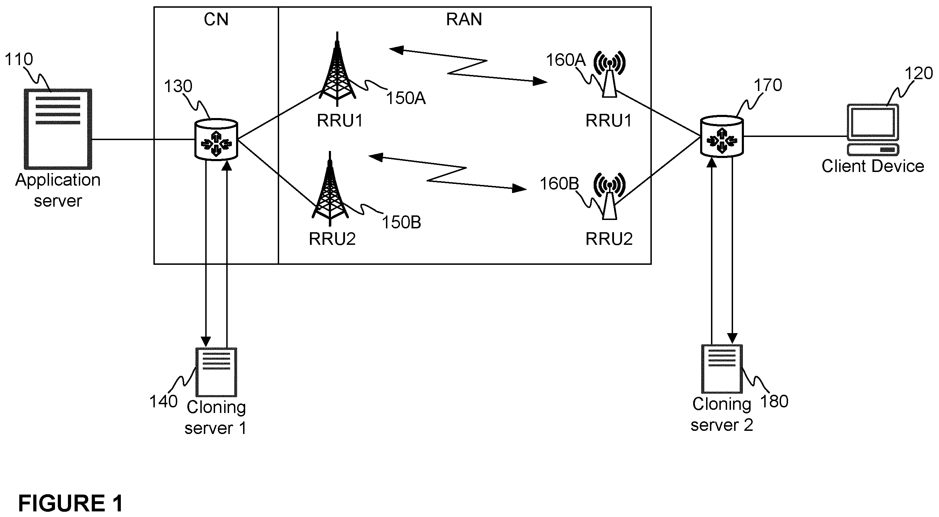

The present invention relates to managing a latency issue between a transmitting end and a receiving end, i.e. the communicating parties, with an arrangement in which at least part of data in original data packet(s) are transmitted over two communication channels with a predefined arrangement as is described in the forthcoming description. The description of the invention is started by referring to Figure 1 illustrating schematically an example of a communication system according to the present invention. In the communication system the communicating entities are an application server 110 and a client device 120 arranged to execute an application the application server 110 serves. In other words, the application server 110 is configured to perform one or more operations to execute the application in the client device 120. For example, the application executed in the client device 120 may receive data from the application server 110 and transmit data thereto. The communication channel between the communicating parties is at least in part implemented in a wireless manner. In the example as illustrated in Figure 1 the wireless portion of the communication channel is implemented with a mobile communication network wherein the mobile communication network consists of a core network CN and a radio access network RAN. Both of these are equipped with known entities so as to enable the communication within the mobile communication network. In accordance with the invention a transmitting end, i.e. either the application server 110 or the client device 120, transmits one or more data packets to the receiving end, i.e. the other one from the application server 110 or the client device 120 than the transmitting end. For sake of clarity, in the following description of at least some aspects of the present invention it is hereby assumed that the transmitting end refers to the application server 110 and the receiving end is the client device 120. Further, the at least some aspects of the present invention are described from a viewpoint of one data packet transmitted, but it is clear that during a transmission a plurality of data packets are consecutively transmitted between the communicating parties and the procedure as is described may be performed to each of the data packets transmitted between the communicating parties. The communication channel between the communicating parties may be established with so-called connectionless protocols, such as UDP, or with so-called connection-oriented protocols, such as with TCP, SCTP, QUIC. In the latter case the connection is set up initially with different entities in the communication channel prior the data packets are transferred between the transmitting end and the receiving end.

In accordance with at least some example embodiments the data packet generated by the application server 110 and transmitted towards the client device 120 is conveyed to a router device 130 that is arranged to reroute the data packet to a server 140 called as a cloning server 1 in Figure 1. The rerouting may be performed by instructing the router device 130 to reroute all packets originating from a certain network address to the cloning server 1 140, for example. The router device 130 may reside, as shown in Figure 1, in the core network CN or it may reside outside the core network CN. In the latter case the core network CN may be configured to route the data packets to the router device 130. The cloning server 1 140 is arranged to execute an application that is configured to generate a number of clones of the received data packet. In accordance with the invention the cloning server 1 140 may be configured to generate two new data packets by copying the content, i.e. the payload, from the original data packet and insert it to the new data packets. The cloning server 1 140 is also configured to set new destination addresses, i.e. IP destination addresses, to the data packets so that the data packets are routed over different communication channels to the final destination as is described in the forthcoming description. In other words, the cloning server 1 140 may e.g. be provided with information on IP addresses of radio interfaces as is described in the forthcoming description to route the data packets, respectively, through them. As such, the data packets are provided with IP address information that is applied through known routing tables in the IP based communication to route the data traffic between the source and the destination. Additionally, the cloning server 1 140 is configured to add respective indexes to the cloned data packets, i.e. to the new data packets. The indexes added to each of the data packets differ from each other. The indexes may e.g. be generated by arranging a consecutive numbering to each of the data packets, but the indexing may also comprise a definition linking the first cloned data packet and the second cloned data packet called together for recognizing it at the receiving side. Thus, the data packets generated by the cloning server 1 140 may have one of the data structures as shown below:
| *Header Information* | *Payload Data* | *Index* |
   or
| *Header Information* | *Payload Data + Index* |*.*

In other words, the data packet may be provided with a dedicated field for the index data. The dedicated field may also reside in the header information. Also, as shown in the latter structure the index data may be included in the payload portion of the data packet in accordance with some embodiments. As is directly derivable from above the header information and the payload data in both the data packets correspond to each other, but the indexes differ from each other at least to some extent. For avoidance of doubt it is worthwhile to mention that the header information may comprise the address information of the destinations of the data packets.

In response to the cloning operation in the described manner the new data packets are delivered to the router device 130 which is configured to route the data packets in accordance with the address information defined in the data packets. Thus, the router device 130 performs a transmit of the first and the second data packet over different communication channels as defined in the address information. For example, the router device 130 may select network entities from the radio access network RAN that are harnessed to the transmit of the respective data packets. In other words, the router device 130 may be configured to transmit the first data packet to a first radio interface 150A and the second data packet to a second radio interface 150B. The radio interfaces 150A, 150B may e.g. refer to different radio remote units, RRUs, e.g. in the same base station or in different base stations. The respective radio interfaces 150A, 150B may advantageously be configured to implement the communication at different frequency bands, such as one applying 800 MHz band whereas the other applying 900 MHz band. As a result, the data packets are sent to the respective radio channels.

At the receiving side there may be arranged a plurality of radio interfaces, such as a first radio interface 160A and a second radio interface 160B configured to implement communication at the respective frequency bands as at the transmitting side. Thus, e.g. one applying 800 MHz band whereas the other applying 900 MHz band. The radio interfaces 160A, 160B may e.g. be implemented with radio modems, for example. The respective radio interfaces 160A, 160B at the receiving side are configured to delivered received data packets to a router device 170 at the receiving end. The respective router device 170 may be configured to convey the received data packets to a second cloning server 180 named as cloning server 2 in Figure 1. As is clear, the cloning server 2 180 as such does not have any expectations if all the packets sent from the transmitting side are received at the receiving side of the system over the different communication channels. The cloning server 2 180 at the receiving side is configured to manage the data packets conveyed to it as is described in the forthcoming description.

The cloning server 180 at the receiving side of the communication path, i.e. the cloning server 2 in Figure 1, is configured to maintain information on the received data packets and utilize the information as is described herein. Namely, in response to a receipt of data packet provided with the index as described the cloning server 2 180 is configured to check if a corresponding data packet provided with another index is already received at the receiving side. In other words, if the data packet under evaluation is the second cloned data packet the cloning server 2 180 is configured to determine if the first cloned data packet with the index is already received. On the other hand, if the data packet under evaluation is the first cloned data packet provided with its individual index, the cloning server 2 180 is configured to determine if the second cloned data packet provided with its individual index is already received by the cloning server 2 180. Either one of the described situations may occur due to different latencies in the different communication channels and the cloning server 2 180 is configured to prevent a delivery of both data packets forward, but only one of them is delivered forward. And the one forwarded is the first one received by the cloning server 2 180. Thus, in response to the receipt of the data packet, the cloning server 2 180 is configured to determine if a data packet having the same payload is already received. This may be done based on the information included in the indexes of the respective data packets. In accordance with an embodiment where the indexes have a common portion linking the indexes, and, thus, the data packets together, the cloning server 2 180 may be configured to utilize that information to check if the other data packet linked to the just received data packet is already received. For example, the cloning server 2 180 may be provided with an access to a data structure arranged to maintain information at least on indexes already received together with respective data packets and by using at least the common portion of the index of the data packet under evaluation to conduct an inquiry to the data structure to find out if the corresponding index is already present in the data structure which indicates that the other data packet is already received. According to another embodiment the cloning server 2 180 at the receiving side may be aware of indexes assigned to data packets at least to an extent how the indexes for the corresponding data packets are assigned to and based on that information the cloning server 2 180 may generate a detection result if the corresponding data packet is already received. As an example of an applicable approach the data packets may be provided with indexes so that the first cloned data packet is provided with an index having an even number value and the second cloned data packet is provided with an index having an uneven number value being next to the even number value which numerical scheme links the indexes together. As a result, the cloning server 2 180 may determine which data packet has arrived first. Further approaches for determining the same may also be applied to. In view of above the outcome of the determination if the other data packet linked in the described manner to the data packet under evaluation has already arrived may either be that it has already arrived or that it has not arrived. In response to a detection result that it has already arrived the cloning server 2 180 is configured to ignore the data packet under evaluation. The ignoring of the data packet may e.g. refer to that the data packet is deleted, or canceled, in any other manner. This may be done due to a reason that the first arrived data packet is already processed and forwarded, i.e. the payload data is already received at the receiving side. On the other hand, if the detection result indicates that the linked data packet has not arrived, the cloning server 2 180 is configured to perform an operation to remove the index from the data packet under evaluation and the data packet in question is returned to the router device 170. Thus, independently on that if the data packet is the first cloned data packet generated by the application server 110 or the second cloned data packet, it is returned to the form of the original data packet comprising the header and the payload data. **In** response to the receipt of the data packet by the router device 170 the data packet is forwarded to its destination defined e.g. in a destination address field in the header information. As a result, the data packet is delivered to the client device 120.

For sake of clarity it is worthwhile to mention that the implementation of the system in Figure 1 is based on an approach wherein the router devices 130, 170 and the cloning servers 140, 180 are separate network entities communicatively connected to each other. However, it may be arranged that their functionalities at each side are integrated into one entity, cf. into one device, at the respective side, i.e. at least at one of the following sides: the transmitting side, the receiving side. **In** such an implementation the communication between the functionalities of the router device 130, 170 and the respective cloning server 140, 180 is internal communication of the device e.g. over a data bus or similar.

As already mentioned, the above-given description is provided based on a consideration that the transmitter of the original data packet is the application server 110 and the receiver is the client device 120. However, the inventive idea is directly applicable to a communication originating from the client device 120 towards the application server 110. **In** such a situation the cloning server 2 180 is configured to perform the cloning of the original data packet and assigning the indexes to the first cloned data packet and the second cloned data packet in the same manner as already described whereas the cloning server denoted with 140 in Figure 1 performs the evaluation if a data packet linked to the data packet under evaluation has already been received and the removal of index from the received data packets as well as ignoring at least some data packets as described. Naturally, also the other entities residing in the communication channel operate vice versa compared to the foregoing description.

For sake of clarity it is worthwhile to mention that the terms transmitting end and/or transmitting side refer to a portion of the communication system wherefrom the data packet is sent over a communication channel implemented with a radio technology. Correspondingly, the terms receiving end and/or receiving side refer to a portion of the communication system wherein the transmitted data packets are received over the communication channel implemented with a radio technology.

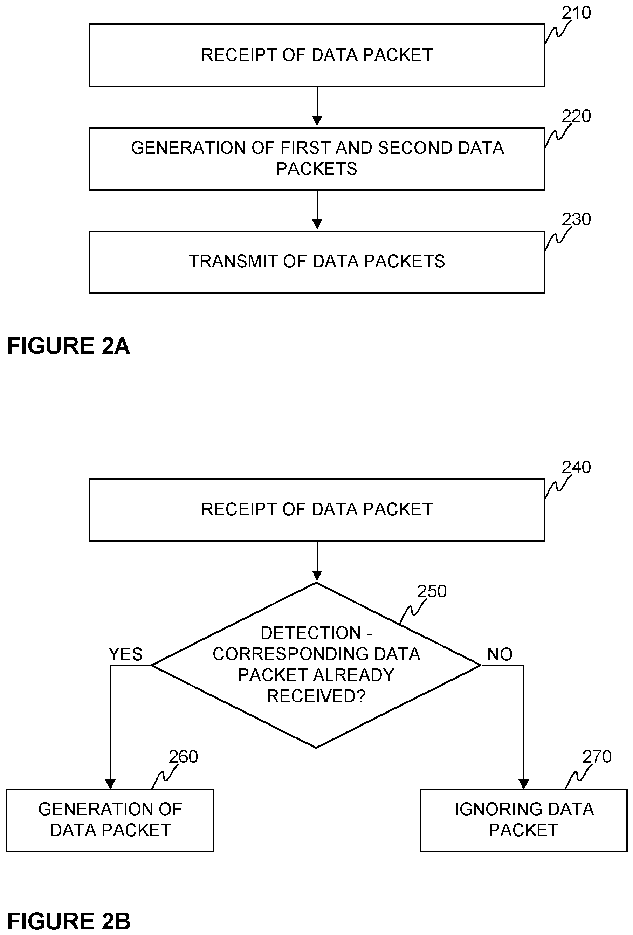

For sake of completeness, Figures 2A and 2B illustrate schematically the method steps in accordance with an example embodiment of the invention both at the transmitting end and the receiving end. More specifically, the respective method steps at each end are performed by an entity called as the cloning server 140, 180 at the respective ends. Thus, Figure 2A schematically illustrates the method steps of an apparatus configured to implement a functionality of the cloning server 140, 180 at the transmitting end. Correspondingly, Figure 2B schematically illustrates the method steps of an apparatus configured to implement a functionality of the cloning server 140, 180 at the receiving end. With the methods a latency in a communication between the communicating parties may be managed.

The apparatus 140, 180 residing at a transmitting end in a communication system, wherein a communication between the transmitting end and the receiving end is at least in part performed wirelessly, is configured to perform the steps as shown in Figure 2A. First, the apparatus 140, 180, cf. the cloning server, is configured to receive 210 a data packet. The data packet is received 210 from a communicating party, i.e. from a device of the communicating party, either directly or indirectly. The communicating party may e.g. be an application server 110 or a client device 120 which sends the data packet and it is conveyed through one or more network entities, such as router devices 130, 170, to the apparatus 140, 180. In response to the receipt of the original data packet comprising header information and payload data the apparatus 140, 180 is configured to generate 220 a first transmittable data packet, cf. the first cloned data packet, by introducing a first index to the data packet received and generate a second transmittable data packet, cf. the second cloned data packet, by introducing a second index to the data packet received. Finally, in response to the generation 220 of the first and the second data packets the apparatus 140, 180 is configured to control 230 a transmit of the first transmittable data packet over a first communication channel to the receiving end and a transmit of the second transmittable data packet over a second communication channel to the receiving end. The controlling 230 of the transmit of the data packets may comprise an operation that indicates to the network entities in the communication channels that the first data packet and the second data packet is to be transmitted over different communication channels to the receiving end. Such indication may be performed by including an indication descriptive of the communication channel to be applied with respect to the data packet in question in the data of the data packet, such as to the header information with applied network addressing, such as with application destination IP addressing. The same may be achieved by encapsulating the respective data packet, or both transmittable data packets, to a control frame wherein the control frame carries data indicative of a communication channel, or communication channels, to be applied with respect to each of the transmittable data packet in question. Alternatively or in addition, the apparatus 140, 180 may be configured to generate one or more control signals defining to a necessary extent the communication channel to be applied with in relation to the generated 220 data packets. This may e.g. be done by using the index values included in the data packets so as to enable the network entity managing a delivery of the data packets to various communication channels to identify the respective data packets. Thus, the controlling 230 of a transmit of the first and the second cloned data packets may refer to various types of operations with an aim to achieve the linked data packets to be transmitted to the receiving end over different communication channels.

On the other hand, the apparatus 140, 180 residing at a receiving end in a communication system, wherein a communication between the transmitting end and the receiving end is at least in part performed wirelessly, is configured to perform the steps as shown in Figure 2B. First, the apparatus 140, 180 residing at the receiving end receives 240 a data packet over a communication channel. The data packet comprise data corresponding to an index. In response to the receipt 240 of the data packet the apparatus 140, 180 is configured to detect 250, based on the index of the received data packet i.e. the information defined in the index data, if the index received in the data packet is related to an index in a prior data packet received by the apparatus 140, 180. The relation of the indexes may be detected 250 in a manner as described in the foregoing description and if it is detected that the index of the data packet is related to an index data received in a prior data packet, it may be interpreted that the apparatus 140, 180 has already managed a data packet comprising the same payload data. Thus, a conclusion may be made that the data packet under evaluation may be ignored 270. On the other hand, if any relationship to an earlier data packet cannot be found based on the indexes, the apparatus 140, 180 may generate 260 a data packet in the manner as described earlier. The generation 260 of the data packet may comprise an operation in which the index data is removed from the received data packet. In response to this the apparatus 140, 180 may be configured to forward the data packet towards the recipient defined e.g. as a network address in the header information of the data packet.

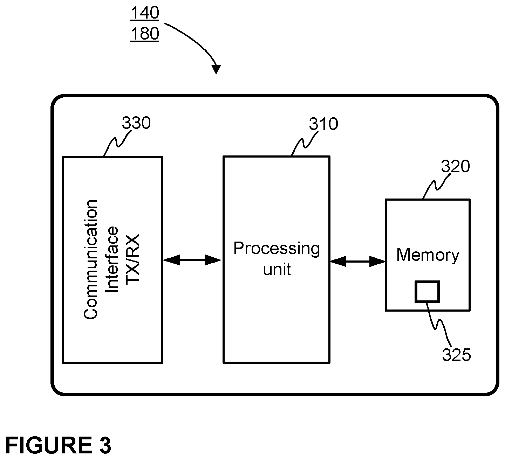

A non-limiting example of suitable apparatus to implement an operation of a cloning server is schematically illustrated in Figure 3. In other words, the apparatus may be configured to implement at least part of the method steps as described. The execution of the respective method steps, or at least some portions of them, may be achieved by arranging a processing unit 310 comprising at least one processor to execute at least some portion of computer program code 325 stored in at least one memory 320 causing the processor 310, and, thus, the apparatus to implement the method steps as described in order to execute the function as described. In other words, the processing unit 310 may be arranged to access the memory 320 and to retrieve and to store any information therefrom and thereto. Moreover, the processing unit 310 may be configured to control a communication through one or more communication interfaces 330 for accessing the other entities being involved in the operation.

Hence, the communication interface 330 may be arranged to implement, possibly under control of the processing unit 310, a number of communication protocols, such as an IP and/or any other communication protocol, for communicating with one or more entities to receive input and to output data e.g. in a form of data packets as described. The term communication interface 330 shall be understood in a broad manner comprising necessary hardware and software elements for implementing the communication techniques. Further, the apparatus 140, 180 in question may comprise one or more input/output devices for inputting and outputting information. In accordance with the present invention such input/output devices forming a user interface may at least comprise a touch screen, but may also comprise further entities, such as a physical keyboard, buttons, display, loudspeaker, microphone camera and so on. In some implementation of the apparatus at least some of the input/output devices may be external to the apparatus and coupled to it either wirelessly or in a wired manner. For sake of clarity, the processing unit 310 herein refers to any unit or a plurality of units suitable for processing information and control the operation of the apparatus in general at least in part, among other tasks. The mentioned operations may e.g. be implemented with a microcontroller solution with embedded software. Similarly, the invention is not limited to a certain type of memory 320, but any memory unit or a plurality of memory units suitable for storing the described pieces of information, such as portions of computer program code and/or parameters, may be applied in the context of the present invention. Moreover, at least the mentioned entities may be arranged to be at least communicatively coupled to each other with an internal data connection, such as with a data bus.

In some examples, the apparatus may be implemented with a distributed computing environment in which a plurality of computing devices is configured to cooperate to cause an execution of the method according to at least one of the examples as described. A non-limiting example of such a distributed computing system may be that a first apparatus is configured to perform one or more steps of the respective method, and a second apparatus, and any further apparatuses, in turn, may be configured to perform the remaining steps needed to complete operation as described.

As derivable from above, some aspects of the present invention may relate to a computer program product which, when executed by at least one processor, cause an apparatus to perform at least some portions of the method as described. For example, the computer program product may comprise at least one computer-readable non-transitory medium having the computer program code 325 stored thereon. The computer-readable non-transitory medium may comprise a memory device or a record medium such as a CD-ROM, a DVD, a Blu-ray disc, or another article of manufacture that tangibly embodies the computer program. As another example, the computer program may be provided as a signal configured to reliably transfer the computer pro-gram.

Still further, the computer program code 325 may comprise a proprietary application, such as computer program code for generating the data record in the manner as described.

The computer program code 325 may also be considered to include the definitions and instructions of an execution of the application of the data record in a further use.

The specific examples provided in the description given above should not be construed as limiting the applicability and/or the interpretation of the appended claims. Lists and groups of examples provided in the description given above are not exhaustive unless otherwise explicitly stated.

## Claims

1. An apparatus (140, 180) residing at a transmitting end in a communication system wherein communication between the transmitting end and a receiving end is at least in part performed wirelessly, the apparatus (140, 180) is configured to:
receive (210) a data packet from a router device (130, 170),
generate (220) a first transmittable data packet at least by:
inserting a payload of the received data packet to the first transmittable data packet,
defining a destination address of the first transmittable data packet to cause a delivery of the first transmittable data packet over a first communication channel, and
defining an index to the first transmittable data packet for identifying the first transmittable data packet,
generate (220) a second transmittable data packet at least by:
inserting a payload of the received data packet to the second transmittable data packet,
defining a destination address of the second transmittable data packet to cause a delivery of the second transmittable data packet over a second communication channel, and
defining an index to the second transmittable data packet for identifying the second transmittable data packet,
transmit (230) the first transmittable data packet and the second transmittable data packet to the router device (130, 170),
**characterized in that** the apparatus (140, 180) is configured to generate the first index introduced to the first transmittable data packet and the second index introduced to the second transmittable data packet so that they are related to each other wherein the apparatus (140, 180) is configured to set a relation between the first index to the second index by at least one of: a value of the first index and a value of the second index are provided with a common portion; the value of the first index and the value of the second index comply a predefined numerical scheme, and
wherein the apparatus (140, 180) is configured to define the destination address of the first transmittable data packet and the destination address of the second transmittable data packet so that the first transmittable data packet is transmitted over a first radio interface (150A, 150B, 160A, 160B) and the second transmittable data packet is transmitted over a second radio interface (150A, 150B, 160A, 160B) of the communication system, the first radio interface (150A, 150B, 160A, 160B) and the second radio interface (150A, 150B, 160A, 160B) implement communication at different frequency bands.

2. A method for managing a transmit of data by an apparatus (140, 180) residing at a transmitting end in a communication system wherein communication between the transmitting end and a receiving end is at least in part performed wirelessly, the method, performed by an apparatus (140, 180), comprises:
receiving (210) a data packet from a router device (130, 170),
generating (220) a first transmittable data packet at least by:
inserting a payload of the received data packet to the first transmittable data packet,
defining a destination address of the first transmittable data packet to cause a delivery of the first transmittable data packet over a first communication channel, and
defining an index to the first transmittable data packet for identifying the first transmittable data packet,
generating (220) a second transmittable data packet at least by:
inserting a payload of the received data packet to the second transmittable data packet,
defining a destination address of the second transmittable data packet to cause a delivery of the second transmittable data packet over a second communication channel, and
defining an index to the second transmittable data packet for identifying the second transmittable data packet,
transmitting (230) the first transmittable data packet and the second transmittable data packet to the router device (130, 170),
**characterized in that** the first index introduced to the first transmittable data packet and the second index introduced to the second transmittable data packet are generated so that they are related to each other, wherein a relation between the first index to the second index is set by at least one of: a value of the first index and a value of the second index are provided with a common portion; the value of the first index and the value of the second index comply a predefined numerical scheme, and
wherein the destination address of the first transmittable data packet and the destination address of the second transmittable data packet are defined so that the first transmittable data packet is transmitted over a first radio interface (150A, 150B, 160A, 160B) and the second transmittable data packet is transmitted over a second radio interface (150A, 150B, 160A, 160B) of the communication system, the first radio interface (150A, 150B, 160A, 160B) and the second radio interface (150A, 150B, 160A, 160B) implement communication at different frequency bands.

3. A computer program comprising instructions to cause the apparatus of claim 1 to execute the steps of the method of claim 2.

4. An apparatus (140, 180) residing at a receiving end in a communication system wherein communication between a transmitting end and the receiving end is at least in part performed wirelessly, the apparatus (140, 180) is configured to:
receive (240) a data packet over a communication channel, the data packet carrying an index identifying the data packet,
detect (250), based on data carried in the index of the received data packet, if the index received in the data packet is related to an index in a prior data packet received by the apparatus (140, 180),
**characterized in that** the apparatus (140, 180) is further configured to perform one of the following:
generate (260) a data packet for forwarding by removing the index from the data packet received in response to a detection (250) that the index received in the data packet is not related to an index in a prior data packet received by the apparatus (140, 180),
ignore (270) the data packet received in response to a detection (250) that the index received in the data packet is related to an index in a prior data packet received by the apparatus (140, 180),
wherein the apparatus (140, 180) is configured to perform a detection (250) if the index received in the data packet is related to an index in a prior data packet received by the apparatus (140, 180) at least by one of: determining if a value of the index received in the data packet and a value of the index in a prior data packet are provided with a predefined common portion; determining if the value of the index received in the data packet and the value of the index in a prior data packet comply a predefined numerical scheme.

5. A method for managing a receipt of data by an apparatus (140, 180) residing at a receiving end in a communication system wherein communication between a transmitting end and the receiving end is at least in part performed wirelessly, the method, performed by an apparatus (140, 180), comprises:
receiving (240) a data packet over a communication channel, the data packet carrying an index identifying the data packet,
detecting (250), based on data carried in the index of the received data packet, if the index received in the data packet is related to an index in a prior data packet received by the apparatus (140, 180),
**characterized in that** the method further comprises performing one of the following:
generating (260) a data packet for forwarding by removing the index from the data packet received in response to a detection (250) that the index received in the data packet is not related to an index in a prior data packet received by the apparatus (140, 180),
ignoring (270) the data packet received in response to a detection (250) that the index received in the data packet is related to an index in a prior data packet received by the apparatus (140, 180),
wherein a detection (250) if the index received in the data packet is related to an index in a prior data packet received by the apparatus (140, 180) is performed at least by one of: determining if a value of the index received in the data packet and a value of the index in a prior data packet are provided with a predefined common portion; determining if the value of the index received in the data packet and the value of the index in a prior data packet comply a predefined numerical scheme.

6. A computer program comprising instructions to cause the apparatus of claim 4 to execute the steps of the method of claim 5.

## Patentansprüche

1. Vorrichtung (140, 180), die sich an einem Sendeende in einem Kommunikationssystem befindet, wobei die Kommunikation zwischen Sendeende und Empfangsende zumindest teilweise drahtlos erfolgt, wobei die Vorrichtung (140, 180) dazu konfiguriert ist:
ein Datenpaket von einem Routergerät (130, 170) zu empfangen (210),
ein erstes übertragbares Datenpaket zu erzeugen (220), zumindest durch:
Einfügen einer Nutzlast des empfangenen Datenpakets in das erste übertragbare Datenpaket,
Definieren einer Zieladresse für das erste übertragbare Datenpaket, um dessen Zustellung über einen ersten Kommunikationskanal zu bewirken, und
Definieren eines Index für das erste übertragbare Datenpaket zur Identifizierung dieses ersten übertragbaren Datenpakets,
ein zweites übertragbares Datenpaket zu erzeugen (220), zumindest durch:
Einfügen der Nutzdaten des empfangenen Datenpakets in das zweite übertragbare Datenpaket,
Definieren einer Zieladresse für das zweite übertragbare Datenpaket, um dessen Zustellung über einen zweiten Kommunikationskanal zu veranlassen, und Definieren eines Index für das zweite übertragbare Datenpaket zur Identifizierung des zweiten übertragbaren Datenpakets,
das erste übertragbare Datenpaket und das zweite übertragbare Datenpaket an das Routergerät (130, 170) zu übertragen (230),
**dadurch gekennzeichnet, dass** die Vorrichtung (140, 180) dazu eingerichtet ist, den ersten Index, der in das erste übertragbare Datenpaket eingefügt wird, und den zweiten Index, der in das zweite übertragbare Datenpaket eingefügt wird, derart zu erzeugen, dass diese zueinander in Beziehung stehen, wobei die Vorrichtung (140, 180) so konfiguriert ist, dass sie eine Beziehung zwischen dem ersten Index und dem zweiten Index durch mindestens eine der Folgenden herstellt: der Wert des ersten Index und der Wert des zweiten Index weisen einen gemeinsamen Anteil auf; der Wert des ersten Index und der Wert des zweiten Index entsprechen einem vordefinierten Zahlenschema, und
wobei die Vorrichtung (140, 180) dazu eingerichtet ist, die Zieladresse des ersten übertragbaren Datenpakets und die Zieladresse des zweiten übertragbaren Datenpakets derart festzulegen, dass das erste übertragbare Datenpaket über eine erste Funkschnittstelle (150A, 150B, 160A, 160B) und das zweite übertragbare Datenpaket über eine zweite Funkschnittstelle (150A, 150B, 160A, 160B) des Kommunikationssystems übertragen wird, wobei die erste Funkschnittstelle (150A, 150B, 160A, 160B) und die zweite Funkschnittstelle (150A, 150B, 160A, 160B) eine Kommunikation in unterschiedlichen Frequenzbändern realisieren.

2. Verfahren zur Verwaltung einer Datenübertragung durch eine Vorrichtung (140, 180), die sich an einem Sendeende in einem Kommunikationssystem befindet, wobei die Kommunikation zwischen dem Sendeende und einem Empfangsende zumindest teilweise drahtlos erfolgt, wobei das Verfahren, das von einer Vorrichtung (140, 180) durchgeführt wird, Folgendes umfasst:
Empfangen (210) eines Datenpakets von einem Routergerät (130, 170),
Erzeugen (220) eines ersten übertragbaren Datenpakets mindestens durch:
Einfügen einer Nutzlast des empfangenen Datenpakets in das erste übertragbare Datenpaket,
Definieren einer Zieladresse des ersten übertragbaren Datenpakets, um eine Zustellung des ersten übertragbaren Datenpakets über einen ersten Kommunikationskanal zu bewirken, und
Definieren eines Index für das erste übertragbare Datenpaket zur Identifizierung des ersten übertragbaren Datenpakets,
Erzeugen (220) eines zweiten übertragbaren Datenpakets, zumindest durch:
Einfügen der Nutzdaten des empfangenen Datenpakets in das zweite übertragbare Datenpaket,
Definieren einer Zieladresse für das zweite übertragbare Datenpaket, um dessen Zustellung über einen zweiten Kommunikationskanal zu veranlassen, und
Definieren eines Index für das zweite übertragbare Datenpaket zur Identifizierung des zweiten übertragbaren Datenpakets,
Übertragen (230) des ersten und des zweiten übertragbaren Datenpakets an das Routergerät (130, 170),
**dadurch gekennzeichnet, dass** der erste Index des ersten übertragbaren Datenpakets und der zweite Index des zweiten übertragbaren Datenpakets so erzeugt werden, dass sie miteinander in Beziehung stehen, wobei diese Beziehung zwischen dem ersten und dem zweiten Index durch mindestens eine der Folgenden festgelegt wird: der erste und der zweite Index weisen einen gemeinsamen Anteil auf; der erste und der zweite Index entsprechen einem vordefinierten numerischen Schema, und
wobei die Zieladresse des ersten übertragbaren Datenpakets und die Zieladresse des zweiten übertragbaren Datenpakets derart definiert sind, dass das erste übertragbare Datenpaket über eine erste Funkschnittstelle (150A, 150B, 160A, 160B) und das zweite übertragbare Datenpaket über eine zweite Funkschnittstelle (150A, 150B, 160A, 160B) des Kommunikationssystems übertragen werden, wobei die erste Funkschnittstelle (150A, 150B, 160A, 160B) und die zweite Funkschnittstelle (150A, 150B, 160A, 160B) eine Kommunikation in unterschiedlichen Frequenzbändern realisieren.

3. Computerprogramm, umfassend Anweisungen, um die Vorrichtung nach Anspruch 1 zu veranlassen, die Schritte des Verfahrens nach Anspruch 2 auszuführen.

4. Vorrichtung (140, 180), die sich an einem Empfangsende in einem Kommunikationssystem befindet, wobei die Kommunikation zwischen einem Sendeende und dem Empfangsende zumindest teilweise drahtlos erfolgt, wobei die Vorrichtung (140, 180) dazu konfiguriert ist:
ein Datenpaket über einen Kommunikationskanal zu empfangen (240), wobei das Datenpaket einen Index trägt, der das Datenpaket identifiziert,
basierend auf Daten, die in dem Index des empfangenen Datenpakets enthalten sind, zu erkennen (250), ob der in dem Datenpaket empfangene Index mit einem Index in einem früheren, von der Vorrichtung (140, 180) empfangenen Datenpaket in Beziehung steht,
**dadurch gekennzeichnet, dass** die Vorrichtung (140, 180) ferner dazu konfiguriert ist, eines der Folgenden durchzuführen:
Erzeugen (260) eines Datenpakets zur Weiterleitung durch Entfernen des Index aus dem Datenpaket, das als Reaktion auf eine Erkennung (250) empfangen wurde, dass der in dem Datenpaket empfangene Index in keinem Zusammenhang mit einem Index in einem früheren, von der Vorrichtung (140, 180) empfangenen Datenpaket steht,
Ignorieren des Datenpakets (270), das als Reaktion auf eine Erkennung (250) empfangen wurde, dass der in dem Datenpaket empfangene Index mit einem Index in einem früheren, von der Vorrichtung (140, 180) empfangenen Datenpaket in Beziehung steht,
wobei die Vorrichtung (140, 180) dazu konfiguriert ist, eine Erkennung (250) durchzuführen, ob der in dem Datenpaket empfangene Index mit einem Index in einem früheren, von der Vorrichtung (140, 180) empfangenen Datenpaket in Beziehung steht, und zwar zumindest durch eines der folgenden Verfahren: Bestimmen, ob ein Wert des in dem Datenpaket empfangenen Index und ein Wert des Index in einem früheren Datenpaket einen vordefinierten gemeinsamen Teil aufweisen; oder Bestimmen, ob der Wert des in dem Datenpaket empfangenen Index und der Wert des Index in einem früheren Datenpaket einem vordefinierten numerischen Schema entsprechen.

5. Verfahren zur Verwaltung des Empfangs von Daten durch eine Vorrichtung (140, 180), die sich an einem Empfangsende in einem Kommunikationssystem befindet, wobei die Kommunikation zwischen einem Sendeende und einem Empfangsende zumindest teilweise drahtlos erfolgt, umfasst das Verfahren, das von einer Vorrichtung (140, 180) durchgeführt wird, Folgendes:
Empfangen (240) eines Datenpakets über einen Kommunikationskanal, wobei das Datenpaket einen Index zur Identifizierung des Datenpakets enthält,
Erkennen (250) anhand der im Index des empfangenen Datenpakets enthaltenen Daten, ob der im Datenpaket empfangene Index mit einem Index in einem zuvor vom Gerät empfangenen Datenpaket in Beziehung steht (140, 180),
**dadurch gekennzeichnet, dass** das Verfahren ferner die Durchführung einer der folgenden Maßnahmen umfasst:
Erzeugen (260) eines Datenpakets zur Weiterleitung durch Entfernen des Index aus dem Datenpaket, das als Reaktion auf eine Erkennung (250) empfangen wurde, dass der in dem Datenpaket empfangene Index in keinem Zusammenhang mit einem Index in einem früheren Datenpaket steht, das von der Vorrichtung (140, 180) empfangen wurde,
Ignorieren (270) des Datenpakets, das als Reaktion auf eine Erkennung (250) empfangen wurde, dass der in dem Datenpaket empfangene Index mit einem Index in einem früheren Datenpaket in Beziehung steht, das von der Vorrichtung (140, 180) empfangen wurde,
wobei eine Erkennung (250) dahingehend, ob der in dem Datenpaket empfangene Index mit einem Index in einem früheren Datenpaket in Beziehung steht, das von der Vorrichtung (140, 180) empfangen wurde, zumindest durch eines der folgenden Verfahren durchgeführt wird: Bestimmen, ob ein Wert des in dem Datenpaket empfangenen Index und ein Wert des Index in einem früheren Datenpaket einen vordefinierten gemeinsamen Teil aufweisen; Bestimmen, ob der Wert des in dem Datenpaket empfangenen Index und der Wert des Index in einem früheren Datenpaket einem vordefinierten numerischen Schema entsprechen.

6. Computerprogramm, umfassend Anweisungen, um die Vorrichtung nach Anspruch 4 zu veranlassen, die Schritte des Verfahrens nach Anspruch 5 auszuführen.

## Revendications

1. Appareil (140, 180) résidant au niveau d'une extrémité de transmission dans un système de communication dans lequel la communication entre l'extrémité de transmission et une extrémité de réception est au moins en partie exécutée sans fil, l'appareil (140, 180) est configuré pour :
recevoir (210) un paquet de données d'un dispositif de routage (130, 170),
générer (220) un premier paquet de données transmissible au moins par :
l'insertion d'une charge utile du paquet de données reçu dans le premier paquet de données transmissible,
la définition d'une adresse de destination du premier paquet de données transmissible pour provoquer une livraison du premier paquet de données transmissible sur un premier canal de communication, et
la définition d'un index du premier paquet de données transmissible permettant d'identifier le premier paquet de données transmissible,
générer (220) un second paquet de données transmissible au moins par :
l'insertion d'une charge utile du paquet de données reçu dans le second paquet de données transmissible,
la définition d'une adresse de destination du second paquet de données transmissible pour provoquer une livraison du second paquet de données transmissible sur un second canal de communication, et
la définition d'un index du second paquet de données transmissible permettant d'identifier le second paquet de données transmissible,
transmettre (230) le premier paquet de données transmissible et le second paquet de données transmissible au dispositif de routage (130, 170),
**caractérisé en ce que** l'appareil (140, 180) est configuré pour générer le premier index introduit dans le premier paquet de données transmissible et le second index introduit dans le second paquet de données transmissible de telle sorte qu'ils sont liés l'un à l'autre dans lequel l'appareil (140, 180) est configuré pour définir une relation entre le premier index et le second index par au moins l'une parmi : une valeur du premier index et une valeur du second index sont fournies avec une partie commune ; la valeur du premier index et la valeur du second index se conforment à un schéma numérique prédéfini, et
dans lequel l'appareil (140, 180) est configuré pour définir l'adresse de destination du premier paquet de données transmissible et l'adresse de destination du second paquet de données transmissible de telle sorte que le premier paquet de données transmissible est transmis sur une première interface radio (150A, 150B, 160A, 160B) et le second paquet de données transmissible est transmis sur une seconde interface radio (150A, 150B, 160A, 160B) du système de communication, la première interface radio (150A, 150B, 160A, 160B) et la seconde interface radio (150A, 150B, 160A, 160B) implémentent la communication sur différentes bandes de fréquences.

2. Procédé permettant de gérer une transmission de données par un appareil (140, 180) résidant au niveau d'une extrémité de transmission dans un système de communication dans lequel la communication entre l'extrémité de transmission et une extrémité de réception est au moins en partie exécutée sans fil, le procédé, exécuté par un appareil (140, 180), comprend :
la réception (210) d'un paquet de données d'un dispositif de routage (130, 170),
la génération (220) d'un premier paquet de données transmissible au moins par :
l'insertion d'une charge utile du paquet de données reçu dans le premier paquet de données transmissible,
la définition d'une adresse de destination du premier paquet de données transmissible pour provoquer une livraison du premier paquet de données transmissible sur un premier canal de communication, et
la définition d'un index du premier paquet de données transmissible permettant d'identifier le premier paquet de données transmissible,
la génération (220) d'un second paquet de données transmissible au moins par :
l'insertion d'une charge utile du paquet de données reçu dans le second paquet de données transmissible,
la définition d'une adresse de destination du second paquet de données transmissible pour provoquer une livraison du second paquet de données transmissible sur un second canal de communication, et
la définition d'un index du second paquet de données transmissible permettant d'identifier le second paquet de données transmissible,
la transmission (230) du premier paquet de données transmissible et du second paquet de données transmissible au dispositif de routage (130, 170),
**caractérisé en ce que** le premier index introduit dans le premier paquet de données transmissible et le second index introduit dans le second paquet de données transmissible sont générés de telle sorte qu'ils sont liés l'un à l'autre, dans lequel une relation entre le premier index et le second index est définie par au moins l'une parmi : une valeur du premier index et une valeur du second index sont fournies avec une partie commune ;
la valeur du premier index et la valeur du second index se conforment à un schéma numérique prédéfini, et
dans lequel l'adresse de destination du premier paquet de données transmissible et l'adresse de destination du second paquet de données transmissible sont définies de telle sorte que le premier paquet de données transmissible est transmis sur une première interface radio (150A, 150B, 160A, 160B) et que le second paquet de données transmissible est transmis sur une seconde interface radio (150A, 150B, 160A, 160B) du système de communication, la première interface radio (150A, 150B, 160A, 160B) et la seconde interface radio (150A, 150B, 160A, 160B) implémentent la communication sur différentes bandes de fréquences.

3. Programme informatique comprenant des instructions destinées à amener l'appareil selon la revendication 1 à exécuter les étapes du procédé selon la revendication 2.

4. Appareil (140, 180) résidant au niveau d'une extrémité de réception dans un système de communication dans lequel la communication entre une extrémité de transmission et l'extrémité de réception est au moins en partie exécutée sans fil, l'appareil (140, 180) est configuré pour :
recevoir (240) un paquet de données sur un canal de communication, le paquet de données transportant un index identifiant le paquet de données,
détecter (250), sur la base des données transportées dans l'index du paquet de données reçu, si l'index reçu dans le paquet de données est lié à un index dans un paquet de données antérieur reçu par l'appareil (140, 180),
**caractérisé en ce que** l'appareil (140, 180) est en outre configuré pour exécuter l'une des opérations suivantes :
générer (260) un paquet de données permettant de transférer par suppression de l'index du paquet de données reçu en réponse à une détection (250) que l'index reçu dans le paquet de données n'est pas lié à un index dans un paquet de données antérieur reçu par l'appareil (140, 180),
ignorer (270) le paquet de données reçu en réponse à une détection (250) que l'index reçu dans le paquet de données est lié à un index dans un paquet de données antérieur reçu par l'appareil (140, 180),
dans lequel l'appareil (140, 180) est configuré pour exécuter une détection (250) du fait que l'index reçu dans le paquet de données est lié à un index figurant dans un paquet de données antérieur reçu par l'appareil (140, 180) au moins par l'une des opérations suivantes : déterminer si une valeur de l'index reçu dans le paquet de données et une valeur de l'index dans un paquet de données antérieur sont fournies avec une partie commune prédéfinie ; déterminer si la valeur de l'index reçu dans le paquet de données et la valeur de l'index dans un paquet de données antérieur se conforment à un schéma numérique prédéfini.

5. Procédé permettant de gérer une réception de données par un appareil (140, 180) résidant au niveau d'une extrémité de réception dans un système de communication dans lequel la communication entre une extrémité de transmission et l'extrémité de réception est au moins en partie exécutée sans fil, le procédé, exécuté par un appareil (140, 180), comprend :
la réception (240) d'un paquet de données sur un canal de communication, le paquet de données transportant un index identifiant le paquet de données,
la détection (250), sur la base des données transportées dans l'index du paquet de données reçu, du fait que l'index reçu dans le paquet de données est lié à un index dans un paquet de données antérieur reçu par l'appareil (140, 180),
**caractérisé en ce que** le procédé comprend en outre l'exécution de l'une des opérations suivantes :
la génération (260) d'un paquet de données permettant de transférer par suppression de l'index du paquet de données reçu en réponse à une détection (250) que l'index reçu dans le paquet de données n'est pas lié à un index dans un paquet de données antérieur reçu par l'appareil (140, 180),
l'ignorance (270) du paquet de données reçu en réponse à une détection (250) que l'index reçu dans le paquet de données est lié à un index dans un paquet de données antérieur reçu par l'appareil (140, 180),
dans lequel une détection (250) du fait que l'index reçu dans le paquet de données est lié à un index dans un paquet de données antérieur reçu par l'appareil (140,180) est exécutée au moins par l'une des opérations suivantes : déterminer si une valeur de l'index reçu dans le paquet de données et une valeur de l'index dans un paquet de données antérieur sont fournies avec une partie commune prédéfinie ; déterminer si la valeur de l'index reçu dans le paquet de données et la valeur de l'index dans un paquet de données antérieur se conforment à un schéma numérique prédéfini.

6. Programme informatique comprenant des instructions destinées à amener l'appareil selon la revendication 4 à exécuter les étapes du procédé selon la revendication 5.
